# EUROPEAN PATENT APPLICATION

(11) **EP 4 238 854 A1**
(43) Date of publication of application: **06.09.2023**
(21) Application number: 22189800.0
(22) Date of filing: 10.08.2022
(51) Int. Cl.: B62D 24/00, B62D 37/00, B62D 37/06

(54) **A LATERAL BALANCING SYSTEM MOUNTED ON A VARIETY OF VEHICLE PLATFORMS**

(30) Priority: 03.03.2022 CN 202210204002
(71) Applicant: Ma, ChunSheng, Henan 450000 (CN)
(72) Inventor: Ma, ChunSheng, Henan 450000 (CN)
(74) Representative: Cabinet Chaillot

(57) **Abstract**

The invention discloses a lateral balancing system mounted on a variety of vehicle platforms, comprising vehicle body, chassis, supporting system, regulating system, the vehicle body is connected to chassis by supporting system; supporting system comprises two supporting columns which are relatively arranged, and inner side of the two supporting columns is provided with racks; regulating system comprises gyroscope, motor and gears matched with the racks, the gyroscope inducts vehicle running state and controls rotation of the motor, and controls inclination angle of vehicle body through the coordination of gears and racks. The invention assists the vehicle to keep vehicle body in a horizontal state when passing side slope, improves the vehicle's smoothness and comfort, and avoid the vehicle rollover. The invention has better supporting effect and strong supporting force by adopting gears and racks, and can be applied and carried on multiple vehicle platforms, has good applicability and economic value.

## Description

### Technology Field

The invention relates to vehicle technology field, in particular to a lateral balancing system mounted on a variety of vehicle platforms.

### Background Art

Vehicles are often prone to side slopes and turns. The vehicle is very dangerous when turning or driving on the side slope, since the center of gravity of vehicle will constantly change with the side slope terrain, many unexpected situations will occur; once the vehicle loses control, it is prone to accidents such as vehicle rollover. In addition, when the vehicle turns, an outward centrifugal force will be generated; if the vehicle speed is too fast, it is easy to cause a rollover.

In the prior art, there is no balancing system that can effectively adjust the lateral balance of the vehicle, stabilize the center of gravity of the vehicle, and improve the safety of the vehicle when turning and passing the side slope.

### Summary of the Invention

The invention aims to overcome the above problems and provide a lateral balancing system mounted on a variety of vehicle platforms. To achieve the above purposes, the invention adopts the following technical scheme:
A lateral balancing system mounted on a variety of vehicle platforms, comprising vehicle body, chassis, supporting system and regulating system, the vehicle body is connected to the chassis by the supporting system;
the supporting system comprises two supporting columns which are relatively arranged, and inner side of the two supporting columns is provided with racks;
the regulating system comprises a gyroscope, a motor and gears matched with the racks, the gyroscope inducts vehicle running state and controls rotation of the motor, and controls inclination angle of the vehicle body through the coordination of gears and racks.

As an improvement, the chassis is a car chassis or a train chassis.

As an improvement, the gyroscope is electrically connected to the motor, and controls the operation state of the motor.

As an improvement, the motor and gear are relatively fixed with the vehicle body and slide up and down along the supporting columns.

As an improvement, the supporting column is hinged with the chassis.

The invention has the following advantages:
The invention can assist the vehicle to keep the vehicle body in a horizontal state when passing through side slopes and turning, stabilize the center of gravity of the vehicle, improve the stability and comfort of the vehicle, and prevent the vehicle from rolling over.

The invention adopts the transmission mode of gears and racks, has better supporting effect and strong supporting force, can be applied and mounted on multiple vehicle platforms such as cars, trucks, trains, etc., and has good applicability and economic value.

### Brief Description of Accompany Drawings

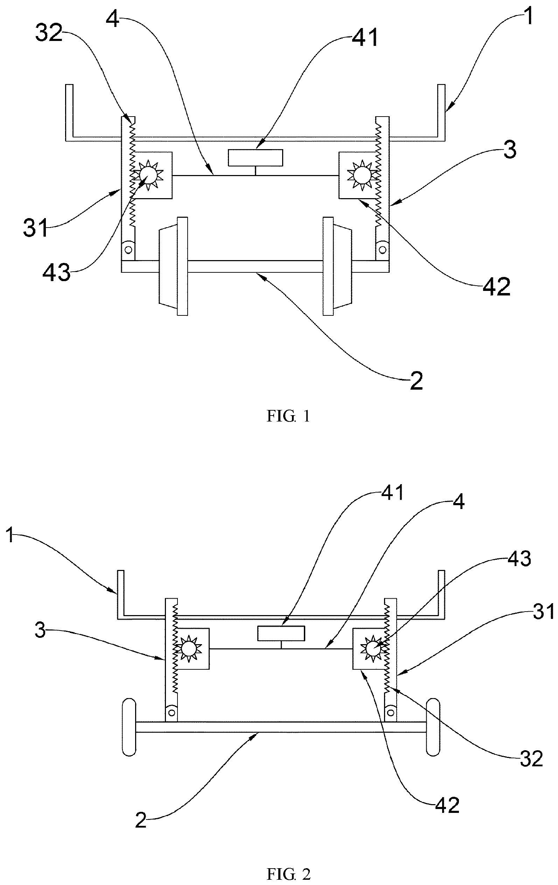

FIG. 1 shows the structure of a lateral balancing system mounted on a variety of vehicle platforms in Embodiment 1 of the invention;
FIG. 2 shows the structure of a lateral balancing system mounted on a variety of vehicle platforms in Embodiment 2 of the invention.

In the accompanying drawings:
1 refers to vehicle body, 2 refers to chassis, 3 refers to supporting system, 31 refers to supporting column, 32 refers to rack, 4 refers to regulating system, 41 refers to supporting column, 42 refers to motor, 43 refers to gear.

### Specific Embodiments of the Invention

In order to better understand the invention, the following embodiments are used for detailed and specific introduction of the invention, however, the following embodiments do not limit the protection scope of the invention.

### Embodiment 1

The embodiment discloses a lateral balancing system mounted on a variety of vehicle platforms, comprising vehicle body 1, chassis 2, supporting system 3 and regulating system 4. The vehicle body 1 is connected to the chassis 2 by the supporting system 3;

the supporting system 3 comprises two supporting columns 31 which are relatively arranged, and inner side of the two supporting columns 31 is provided with racks 32.

The regulating system 4 comprises a gyroscope 41, a motor 42 and gears 43 matched with the racks 32, the gyroscope 41 inducts vehicle running state and controls rotation of the motor 42, and controls inclination angle of the vehicle body 1 through the coordination of gears 43 and racks 32.

The gyroscope 41 is electrically connected to the motor 42, and controls the operation state of the motor 42.

The motor 42 and gear 32 are relatively fixed with the vehicle body 1 and slide up and down along the supporting columns 31. The supporting column 31 is hinged with the chassis 2.

In the embodiment, the chassis 2 is vehicle chassis.

### Embodiment 2

The embodiment discloses a lateral balancing system mounted on a variety of vehicle platforms, comprising vehicle body 1, chassis 2, supporting system 3 and regulating system 4. The vehicle body 1 is connected to the chassis 2 by the supporting system 3;
the supporting system 3 comprises two supporting columns 31 which are relatively arranged, and inner side of the two supporting columns 31 is provided with racks 32;

The regulating system 4 comprises a gyroscope 41, a motor 42 and gears 43 matched with the racks 32, the gyroscope 41 inducts vehicle running state and controls rotation of the motor 42, and controls inclination angle of the vehicle body 1 through the coordination of gears 43 and racks 32.

The gyroscope 41 is electrically connected to the motor 42, and controls the operation state of the motor 42.

The motor 42 and gear 32 are relatively fixed with the vehicle body 1 and slide up and down along the supporting columns 31. The supporting column 31 is hinged with the chassis 2.

In the embodiment, the chassis 2 is vehicle chassis.

The specific embodiments of the invention have been described above in detail, but they are only used as examples, and the invention is not equivalent to the specific embodiments described above. For those skilled in the art, any equivalent modifications and substitutions to the invention are also within the scope of the invention. Therefore, equivalent changes and modifications made without departing from the spirit and scope of the invention should be included within the scope of the invention.

## Claims

1. A lateral balancing system mounted on a variety of vehicle platforms, comprising vehicle body, chassis, supporting system and regulating system, the vehicle body is connected to the chassis by the supporting system;
the supporting system comprises two supporting columns which are relatively arranged, and inner side of the two supporting columns is provided with racks;
the regulating system comprises a gyroscope, a motor and gears matched with the racks, the gyroscope inducts vehicle running state and controls rotation of the motor, and controls inclination angle of the vehicle body through the coordination of gears and racks.

2. The lateral balancing system mounted on a variety of vehicle platforms of claim 1, wherein the chassis is a car chassis or a train chassis.

3. The lateral balancing system mounted on a variety of vehicle platforms of claim 1, wherein the gyroscope is electrically connected to the motor, and controls the operation state of the motor.

4. The lateral balancing system mounted on a variety of vehicle platforms of claim 1, wherein the motor and gear are relatively fixed with the vehicle body and slide up and down along the supporting columns.

5. The lateral balancing system mounted on a variety of vehicle platforms of claim 1, wherein the supporting column is hinged with the chassis.
